Europäisches Patentamt

European Patent Office

Office européen des brevets

(19)

(11) Veröffentlichungsnummer: **0 354 509 B1**

## (12) EUROPÄISCHE PATENTSCHRIFT

(45) Veröffentlichungstag der Patentschrift: **30.12.92**

(21) Anmeldenummer: **89114526.0**

(22) Anmeldetag: **07.08.89**

(51) Int. Cl.⁵: **B23P 19/02**, B23P 11/02

(54) **Verfahren und Vorrichtung zum Ausbauen von langen, aus zähem Werkstoff bestehenden Innenkörpern aus gebohrten Elementen von Schrumpfverbindungen.**

(30) Priorität: **10.08.88 DE 3827036**

(43) Veröffentlichungstag der Anmeldung:
**14.02.90 Patentblatt 90/07**

(45) Bekanntmachung des Hinweises auf die
Patenterteilung:
**30.12.92 Patentblatt 92/53**

(84) Benannte Vertragsstaaten:
**AT BE CH DE ES FR GB GR IT LI LU NL SE**

(56) Entgegenhaltungen:
**EP-A- 0 347 584**
**GB-A- 373 167**

(73) Patentinhaber: **GEC ALSTHOM SA**
**38, avenue Kléber**
**F-75116 Paris(FR)**

(72) Erfinder: **Tremmel, Dieter**
**Wilhelmshavener Strasse 97**
**W-8500 Nürnberg 90(DE)**

(74) Vertreter: **Weinmiller, Jürgen et al**
**Lennéstrasse 9 Postfach 24**
**W-8133 Feldafing(DE)**

EP 0 354 509 B1

**Beschreibung**

Die Erfindung bezieht sich gemäß dem Oberbegriff des Anspruchs 1 auf ein verfahren zum Ausbauen von langen, aus zähem Werkstoff bestehenden Wellen, Bolzen oder dergleichen Innenkörpern aus Naben bzw. gebohrten Elementen von Schrumpfverbindungen. - Außerdem bezieht sich die Erfindung auf Vorrichtungen zur Durchführung des Verfahrens gemäß den Oberbegriffen der Ansprüche 4 und 7.

Bei Gas- und Dampfturbinen ist es bekannt, Laufschaufeln mit Steckfüßen zu versehen und über mehrreihige Bolzen-Lochverbindungen mit dem Radscheibenkopf zu verbinden. Es hat sich gezeigt, daß bei modernen Dampfturbinen die beispielsweise bis ca. 400 mm langen Bolzen (Niete) von Laufschaufelendstufen und kürzere Bolzen heißer Laufschaufelstufen wegen zu großer axialer Reibungskräfte nach einer gewissen Betriebszeit nicht mehr durch Drücken aus den Bohrungen ausgebaut werden können. Die Ursachen dafür liegen z.B. in inneren Verspannungen zwischen den einzelnen Bolzenebenen, in Verschmutzung und Oxidation der Passungsflächen und in der elastischen Querverdickung der Bolzen bei Druckbeanspruchung in Verbindung mit einer Klemm- und Klinkenwirkung der sich verbiegenden und schief stellenden Scheiben- und Schaufelstege.

Nachdem die bekannten Verfahren zum Lösen festsitzender Schrumpfverbindungen wie Unterkühlung oder Aufheizung, hydraulische Preßölverbände und gleichzeitiges Drücken und Ziehen mit Unterstützung eines pneumatischen Hammers teilweise technisch nicht anwendbar sind und - sofern sie anwendbar wären - nicht den gewünschten Erfolg gebracht haben, hat man gemäß Stand der Technik die Bolzen bis auf eine Restwanddicke von einigen zehntel mm ganz oder teilweise ausgebohrt, um die inneren Verspannungen zu lösen. Dabei ist jedoch die Gefahr sehr groß, daß der Bohrer verläuft und nach Eintreten in das weichere Radscheibenmaterial vom härteren Bolzenmaterial mehr und mehr einseitig weggedrückt wird. Als Folge entstehen teilweise Bohrungen in den Laufschaufel- und Radscheibenstegen, die eine Ovalität von 2 bis 3 mm aufweisen, was die Funktion der Steckfußverbindung in Frage stellen kann. Zwar könnte man das Ausbohren der Bolzen durch Verwendung von Bohrbüchsen und sehr vorsichtigen Arbeiten sicherer gestalten, jedoch ist diese Verfahrensweise wegen des relativ großen Zeitbedarfs und der damit verbundenen langen Nichtverfügbarkeit der Turbine praktisch nicht anwendbar.

Der Erfindung liegt daher die Aufgabe zugrunde, ein Verfahren der eingangs genannten Art und zu seiner Durchführung geeignete Vorrichtungen zu schaffen, die einen leichten und schnellen Ausbau von Innenkörpern, insbesondere Steckfußbolzen, ermöglichen. Sie geht dabei im Oberbegriff des Anspruchs 1 von einem Stand der Technik aus, wie er z.B. durch die GB-A-373,167 belegt wird. Dort wird ein Innenkörper in einem ersten Schritt durch Kaltziehen bis in den plastischen Bereich zum Schrumpfen gebracht, dann ausgeglüht und dann erneut durch Kaltziehen gelängt. Dieses Wechselspiel wird gegebenenfalls so oft wiederholt, bis sich der Innenkörper entfernen läßt. Es ist offenbar, daß die Aufgabe, den Innenkörper schnell auszubauen, dadurch nicht gelöst wird.

Diese Aufgabe wird dagegen verfahrensgemäß durch die im Kennzeichen des Anspruchs 1 angegebenen Merkmale gelöst. Bei der Anwendung des erfindungsgemäßen Verfahrens zum Ausbau von Steckfußbolzen von Dampfturbinen kann ferner, was ein weiterer Vorteil ist, auf den bisher bei der Berechnung der Steckfußverbindungen zum Aufbohren vorgesehenen Zuschlag auf die Nennspannungsfläche ganz oder teilweise verzichtet werden.

Um eine nahezu über die ganze Innenkörperlänge laufende "Fließwelle" zu erreichen, wird in weiterer Ausgestaltung des Verfahrens der Innenkörper von einer Seite gezogen und gleichzeitig auf der gegenüberliegenden Seite gegengehalten, oder es wird der Innenkörper gleichzeitig von beiden Seiten gezogen. - Ein weiterer Vorteil dieser Verfahrensmerkmale besteht darin, daß Riefen, die sonst durch Fressen und Wiederlosreißen entstehen, in den Bohrungen der gebohrten Elemente ganz oder weitgehend vermieden sind.

Die der Erfindung zugrunde liegende Aufgabe wird vorrichtungsgemäß durch die im Kennzeichen der Ansprüche 4 und 7 angeführten Merkmale gelöst. - Der Vorteil der erfindungsgemäßen Vorrichtung gemäß Anspruch 7 im Vergleich zu der Vorrichtung gemäß Anspruch 4 besteht insbesondere darin, daß nahezu die doppelte Längskraft (Zugkraft) eingeleitet werden kann.

In weiterer Ausgestaltung der Erfindung weist die Axialbohrung zwischen den Gewindeauslauf und dem Innenkörperende einen zylindrischen, glatten Abschnitt auf, dessen Innendurchmesser gleich dem Außendurchmesser des Feingewindes und dessen Länge gemäß der Formel $L \approx \sqrt{R \times S_R}$ gewählt ist. Das Vorsehen des vorgenannten zylindrischen Abschnittes hat den Vorteil, daß die radiale Aufstülpungstendenz am Gewindeauslauf relativ gering ist.

Eine Verringerung bzw. Vermeidung radialer Aufweitungstendenzen ergibt sich ferner, wenn gemäß einer Weiterbildung der Erfindung die Feingewinde Sägengewinde oder dergleichen radialdehnungsarme Gewinde sind.

EP 0 354 509 B1

Eine Weiterbildung der erfindungsgemäßen Vorrichtung besteht darin, daß der bzw. jeder Zugstift, der bzw. jeder Zugbolzen und die zugeordneten Innenkörperteile konische Form aufweisen, daß die Gewinde Sägengewinde oder dergleichen radialdehnungsarme Gewinde mit Tragflankenwinkeln zwischen 0° und 15° sind, und daß sich an die konische Bohrung im Innenkörper ein zylindrischer, glatter Abschnitt, dessen Durchmesser gleich dem größten Außendurchmesser des konischen Gewindes des Zugbolzens und dessen Länge gemäß der Formel $L \approx \sqrt{R \times S_R}$ gewählt ist, anschließt. - Dabei führt die konische Form des bzw. der Zugstifte bzw. Zugbolzen zu einer Optimierung der nutzbaren Querschnitte. Die radialdehnungsarme Gewindeform und die zylindrischen, glatten Abschnitte sind wegen der geringen Restwanddicke des Innenkörpers erforderlich, da sonst ein Abreißen des Innenkörpers eintreten kann.

Aus Gründen der einfacheren Herstellung und größtmöglicher Krafteinleitung kann der bzw. jeder Gewindekonus zwei Abschnitte mit gleicher oder unterschiedlicher Kegelneigung, gleicher oder unterschiedlicher Gewindesteigung und gleichen oder unterschiedlichen Tragflankenwinkeln aufweisen.

In der Zeichnung sind Beispiele der Erfindung für den Anwendungsfall des Ausbauens von Dampfturbinen-Steckfußbolzen mit dem üblicherweise verwendeten 12%-Cr-Werkstoff schematisch dargestellt und nachfolgend erläutert. Es zeigt:

Figur 1    das Spannungs-Längs- und Querdehnungsdiagramm für den Bolzenwerkstoff,

Figur 2    den zeitlichen Verfahrensablauf eines ersten Ausführungsbeispiels,

Figur 3    ein zweites Ausführungsbeispiel mit einer Ausziehvorrichtung, teilweise im Querschnitt,

Figur 4    ein drittes Ausführungsbeispiel mit einer alternativen Ausziehvorrichtung, teilweise im Querschnitt

Figur 5    ein Detail der dritten Ausziehvorrichtung in Verbindung mit einer konischen Gewindeform,

Figur 6    ein Detail aus Figur 5, im Ausschnitt, nämlich konisches Sägengewinde.

Figur 7    einen ausschnittsweisen Querschnitt durch eine modifizierte kurze Innenkörper-Axialbohrung in zweistufiger konischer Gewindeausführung,

Figur 8    eine Verteilung der Kräfte und Spannungen in den Gewindeflanken,

Figur 9    Verzögerung des Fließbeginns im Restquerschnitt durch definierten zweiachsigen Spannungszustand.

Bevor die einzelnen Verfahrensschritte und die verschiedenen Anordnungen zum Einleiten der Zugkräfte in den Bolzen erläutert werden, seien allgemeine Gesichtspunkte vorausgeschickt.

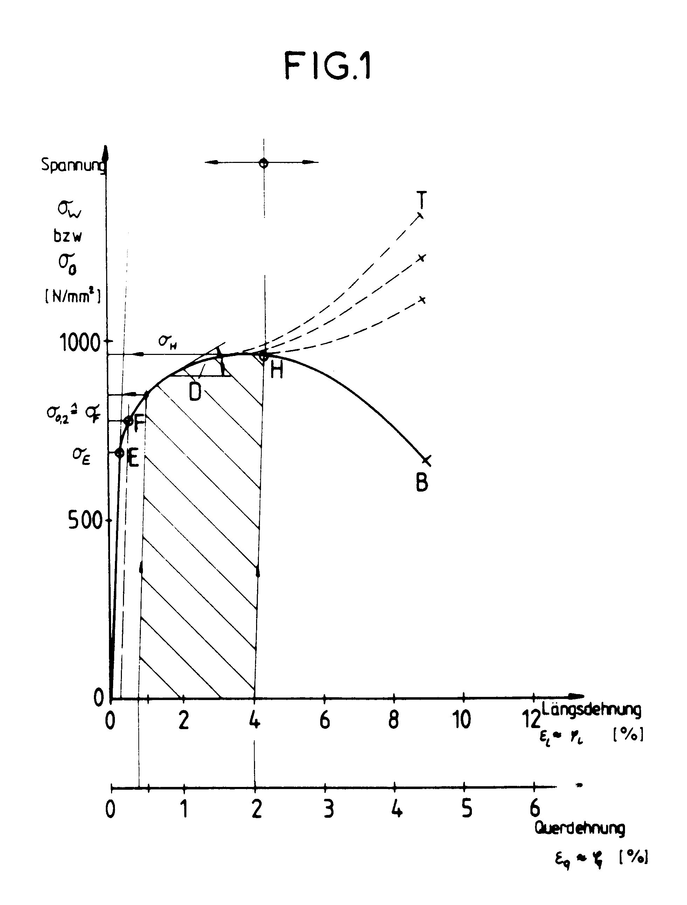

Grundlage für die Querschnittsverdünnung des Bolzens durch Ziehen bis in den plastischen Bereich ist die statische Fließkurve $\sigma_0$ $(\epsilon)$ bzw. $\sigma_{wirklich}$ $(\phi)$ des Bolzenwerkstoffes gemäß Figur 1. Die Fließkurve kann in folgende Bereiche unterteilt werden:

O-E:    elastischer (Hookescher) Bereich,

E-F:    Bereich zwischen Elastizitätsgrenze $\sigma_E$ und technischer Fließgrenze $\sigma_F$ (entspricht $\sigma_{0,2}$)

F-H    : Gleichmaßdehnungsbereich bis zum Höchstlastpunkt H bei der noch keine Einschnürung und damit Instabilität eintritt, jedoch relativ große plastische Dehnungen, und damit Querkontraktionen, möglich sind.

Von technischem Interesse für die erfindungsgemäße Anwendung ist vor allem der in Abbildung 1 schraffierte Bereich vor dem Höchstlastpunkt H, wo eine größere Variation der Dehnung nur eine geringe Variation der Spannung ergibt.

H-B:    (bzw. H-T) Ab dem Höchstlastpunkt H findet nach einem gewissen Verfestigungsgrad eine örtliche Einschnürung der Querschnittsfläche, und damit die Ausbildung eines dreiachsigen Spannungszustandes statt. Außerdem weicht nunmehr die auf die wahre (momentane) Querschnittsfläche bezogene Spannung

$$\sigma_W = \frac{F}{A_W}$$

stärker von der auf die Ausgangsfläche $A_0$ bezogenen Spannung

$$\sigma_0 = \frac{F}{A_0}$$

ab, wobei der Mehrachsigkeitsgrad - und damit die natürliche oder künstlich herbeigeführte Kerbwirkung - entscheidet, welcher prozentuale Anteil der theoretisch maximal möglichen

3

Trennfestigkeit $\sigma_T$ des Werkstoffs erreicht werden kann. Dieser Beanspruchungszustand erlaubt beispielsweise an lokal begrenzten Krafteinleitungsstellen ein technisch ausnutzbares Spannungsniveau im Bereich der

$$\frac{\sigma_T}{\sigma_{0,2}}$$

ungefähr 1,45 ... 1,80fachen Streckgrenze des üblicherweise verwendeten Bolzenwerkstoffs. Andererseits können in den vorwiegend einachsig beanspruchten Zonen des Bolzens bereits bei einem Spannungsniveau $\sigma_Z$ von

$$\frac{\sigma_z}{\sigma_{0,2}}$$

$\approx$ 1,10 ... 1,25 deutliche und für die erforderliche Querkontraktion des Bolzens ausreichende Fließvorgänge ausgelöst werden.

Die Erfindung basiert auf der Überlegung, daß bei Herbeiführen genau definierter Fließ- und Mehrachsigkeitszustände im Bolzenwerkstoff, insbesondere durch Ausnutzung der kinematischen Dehnungsverfestigung sowie der erhöhten Querzugfestigkeit bei mehrachsigen, insbesondere dreiachsigen, Spannungs/Dehnungszuständen, eine im ungekerbten Bolzenbereich mit zunehmender Längsbelastung örtlich fortschreitende Fließzone erzeugt werden kann, die einerseits aufgrund der Volumenkonstanz bei plastischer Verformung gemäß der Beziehung

$$\frac{\Delta d}{d_0}$$

ungefähr $0,5 \cdot$

$$\frac{\Delta L}{L_0}$$

mit

$$\frac{\Delta d}{d_0}$$

(Querdehnung) und

$$\frac{\Delta l}{l_0}$$

(Längsdehnung)unter Auflösung der axialen Reibungskräfte der Schrumpfverbindung zu einer vollständig gleichmässigen Verdünnung des Bolzens führt. Außerdem stabilisiert sich aufgrund der kinematischen Dehnungsverfestigung

$$\frac{d\sigma}{d\varepsilon_{pl}} > D \qquad (D > D_{min} > 0)$$

die plastische Querkontraktion bei Vermeidung eines Bruchs durch Instabilität auf einem Niveau, das noch im Bereich der Gleichmaßdehnung - d. h. zwischen den Punkten E und H der Fließkurve - liegt.

Bei üblichen Bolzenwerkstoffen liegt der Dehnungsverfestigungsparameter D und die natürliche Höchstlastdehnung

$$\varphi_H = \ln \frac{L_H}{L_0}$$

in einem Bereich, der eine plastische Verdünnung des Bolzens um

$$\frac{\Delta d}{d_0} \Big/ p\ell$$

gleich 1,0 % bis 2,0 % erlaubt, was grundsätzlich ausreichend ist, um auch sehr festsitzende Steckfußbolzen, aber auch anderweitige Schrumpfverbindungen mit großer Baulänge lösen und axial ausziehen zu können.

Des weiteren überlagert sich der plastischen Kontraktion noch die elastische Querkontraktion der Größe:

$$\frac{\Delta d}{d_0} \ \text{elastisch} = \nu \cdot \frac{\sigma_F}{E} \qquad (\nu \approx 0{,}3)$$

wenn der Bolzen mit einer Längskraft in Höhe der Fließgrenze $\sigma_F$ belastet wird.

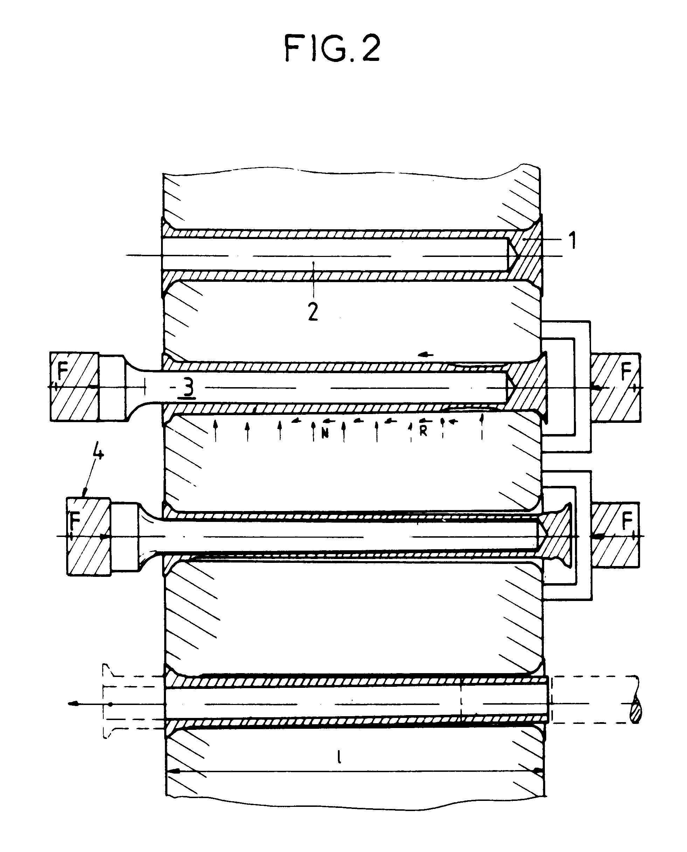

Bei dem in Figur 2 dargestellten Verfahrensbeispiel werden die in Bohrungen der Stege des Dampfturbinen-Radscheibenkopfes und der Stege (Gabeln) der Steckfüße eingeschrumpften Steckfußbolzen 1 - im folgenden kurz Bolzen genannt - der Laufschaufelsteckfuß-Radscheibenkopf-Verbindung vom dampfaustrittsseitigen Bolzenende her mittels einer ortsbeweglichen Bohrvorrichtung bekannter Art bis auf eine bohrungstechnisch unproblematische Restwandstärke von 0,1d ... 0,15d, wobei d den Bolzendurchmesser bedeutet und der kleinere Wert für Bolzen kleineren Durchmessers gilt, sacklochartig über annähernd die ganzen Bolzenlänge zentrisch hohl gebohrt. In die so geschaffene Axialbohrung 2 wird ein hochfester, massiver Druckdorn 3 eingeführt und sein aus der Axialbohrung herausragendes Ende anschließend von der überlicherweise zum Vernieten der Bolzen verwendeten Nietpresse 4 druckbelastet und dabei der Bolzen plastisch gelängt, wobei sich - wegen der Volumenkonstanz - eine Verdünnung des Bolzens ergibt. Aufgrund der Dehnungsverfestigung des Bolzenwerkstoffs ergibt sich eine über die Bolzenlänge fortschreitende "Fließwelle", die zu einem solchen Abbau der axialen Reibungskräfte führt, daß der Bolzen letztlich mit relativ wenig Kraft, nachdem vorher der auf der Dampfeintrittsseite befindliche Nietkopf abgetrennt worden ist, herausgedrückt werden kann.

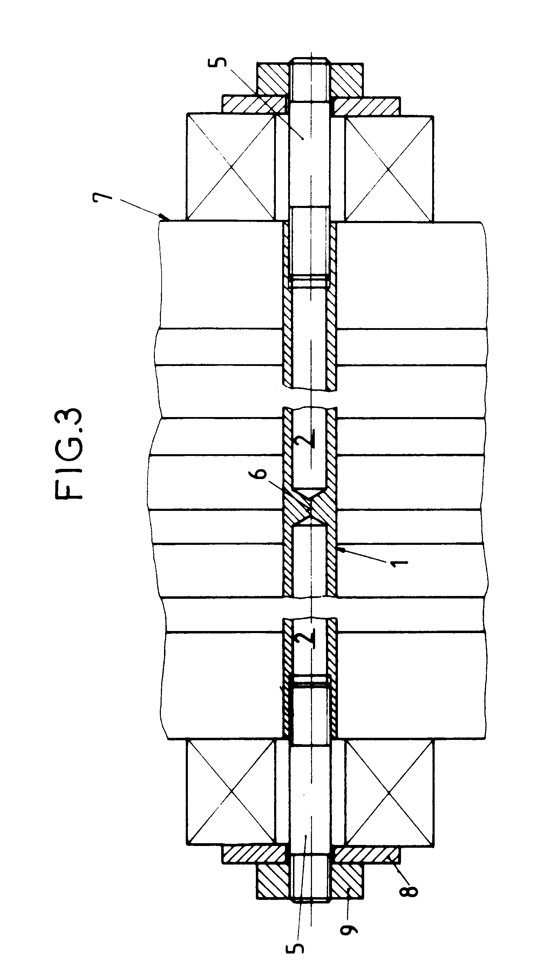

Bei dem in Figur 3 dargestellten Beispiel wird die plastische Querkontraktion durch Ziehen über eingeschraubte Zugstifte 5 erzeugt. Dabei wird zunächst der Bolzen 1 von beiden Seiten her bis auf eine Restwanddicke von 0,1d ... 0,15d möglichst zentrisch hohlgebohrt, wobei ein Mittelstück 6 bestimmter Länge ungebohrt stehen bleiben kann. - Das Mittelstück kann aber auch entfallen, wobei von beiden Seiten her eine durchgehende Bohrung erzeugt wird. - In mindestens eine Bohrung, vorzugsweise jedoch in beide Bohrungen 2, wird in deren Anfangsbereich ein bzw. je ein Feingewinde geschnitten, dessen Kerndurchmesser gleich dem Bohrungsdurchmesser des hohlgebohrten Bolzens ist.

Sodann werden, gemäß dem bevorzugten Beispiel, zwei aus den Bohrungen herausragende Zugstifte 5, die in der Regel aus einem - im Vergleich zum Bolzenwerkstoff - höherfesten Werkstoff hergestellt sein sollten, eingeschraubt. Die Zugkraft auf die Zugstifte 5 wird mittels zweier hydraulischer Pressen gleichzeitig von beiden Seiten ausgeübt, wobei die hydraulischen Pressen sich innerenends gegen die zur Bolzenachse senkrechten Seitenflächen des Radscheibenkopfes 7 und äußerenends gegen innere Seitenflächen der die Zugstifte mit Spiel umgreifenden Zwischenplatten 8 stützen, die ihrerseits mit ihren äußeren Seitenflächen an den inneren Seitenflächen von auf den Zugstiften aufgeschraubten Muttern 9 mit im Vergleich zu den Zwischenplatten 8 radial kleineren Abmessungen anliegen.

Die am dampfeintrittsseitigen Zugstift 5 wirkende hydraulische Presse kann auch entfallen und durch eine gleichlange Scheibe, Platte oder dergleichen Abstandsüberbrückungselement ersetzt sein.

Mittels der hydraulischen Pressen wird in den ungebohrten Bolzenquerschnitt ein vorwiegend einachsi-

EP 0 354 509 B1

ges Zugspannungsniveau $\sigma_Z$ im Bereich

$$1,1 \cdot \sigma_{0,2B} \leqq \sigma_H \approx 950 \ \frac{N}{mm^2}$$

eingebracht. Gleichzeitig ist sicherzustellen, daß im gekerbten - d. h. mit Gewinde versehenen - Restquerschnitt $d_B$ -$d_{aGeW.}$ des Bolzens die unter einem dreiachsigen Spannungszustand erreichbare Kerbzugfestigkeit $\sigma_{BK}$ = $\sigma_{BK}$ $(\alpha_K)$ ungefähr 1100

$$\frac{N}{mm^2}$$

nicht überschritten wird.

Analog gelten für die beiden eingeschraubten Zugstifte 5 die gleichen Überlegungen, wobei jedoch hier für die ungekerbten Bereiche

$$\sigma_Z \leqq \sigma_{0,2}|_{\text{Stift}}$$

sein muß.

Für typische Bolzendurchmesser ergeben sich beispielsweise die folgenden Gewindegrößen und Zugkräfte:
Durchmesser 18 mm: M 14x 1 ($d_K$ = 13), $F_Z$ = 10,9 ... 11,2 t
Durchmesser 15 mm: M 12x 1 ($d_K$ = 11), $F_Z$ = 7,3 ... 7,5 t
Durchmesser 13 mm: M 10x 0,75 ($d_K$ = 9,2), $F_Z$ = 5,9 ... 6,1 t
Die verbleibende Restwandstärke bei einem, beispielsweise 18 mm Bolzen von 2,5 mm bei einer einseitigen Bohrtiefe von 100 bis 120 mm ist auch bei üblichen Bohrungsungenauigkeiten und Fluchtfehlern relativ unkritisch.

Neben der unter Ausnutzung mehrachsiger Belastungszustände speziell angepaßten Dimensionierung der Zugstifte 5 und Gewindeform an den Krafteinleitungsstellen sind zur optimalen Durchführung des Bolzenausbaus noch folgende Details wesentlich:

a) Die Axialbohrungen 2 erhalten in ihren Anfangsbereichen zwecks Minimierung radialer Aufweitungstendenzen und Stülpungen zwischen Bohrungsanfang und Bolzenende je einen zylindrischen, glatten (ungekerbten) Ansatz 10, dessen Durchmesser gleich dem Außendurchmesser des Gewindes ist, mit einer Länge L, die aus der empirisch ermittelten Formel $L \approx \sqrt{R \times S_R}$ zu ermitteln ist, wobei $S_R$ die Wanddicke des Zylinders benennt und R den mittleren Radius des Zylinders darstellt und/oder es werden radialdehnungsarme Gewinde, z. b. Sägengewinde mit genau definierten Flankenwinkeln verwendet.

b) Das Axialloch muß möglichst zentrisch zur Bolzen-Längsmittelachse gebohrt und das Gewinde muß - zwecks Vermeiden zusätzlicher Biegung und Aufweitung - senkrecht zur Seitenfläche des Radscheibenkopfes 7 erzeugt werden.

c) Die Geschwindigkeit des Belastens der Zugvorrichtungen, z.B. hydraulischen Pressen, - die im elastischen Bolzenwerkstoffbereich relativ schnell erfolgen kann - muß nach Fließbeginn des Bolzens 1 sehr langsam - ca. 30 sec - bis zum Höchstlastpunkt, der zwischen 3 % bis 5 % unterhalb der Bruchlast im Kerbquerschnitt der Gewindebolzen liegen sollte, weiterbelastet werden, um dem Bolzenwerkstoff Zeit zur Plastifizierung zu lassen.

d) Kurz vor Erreichen des Höchstlastpunktes H und nach ausreichender plastischer Kontraktion des Bolzens 1 wird der Druck der hydraulischen Presse an der schwer zugänglichen Seite langsam abgesenkt, während der Druck an der gut zugänglichen Seite der hydraulischen Presse aufrechterhalten bleibt.

Der Bolzen 1 kann nun herausgezogen werden, wobei dieser Vorgang durch leichte Hammerschläge auf des schwer zugängliche Bolzenende unterstützt werden kann.

e) Mit Rücksicht auf einen möglichen Bruch von Gewinde, Zugstift oder Bolzen ist eine Sicherungsschelle 11 oder -haube über die hydraulischen Fressen und die Zugstifte 5 zu spannen. Die Befestigung der

6

Sicherungsschellen kann z. B. bei mehrreihigen Bolzenverbindungen in den Gewinden der Nachbarbolzen erfolgen.

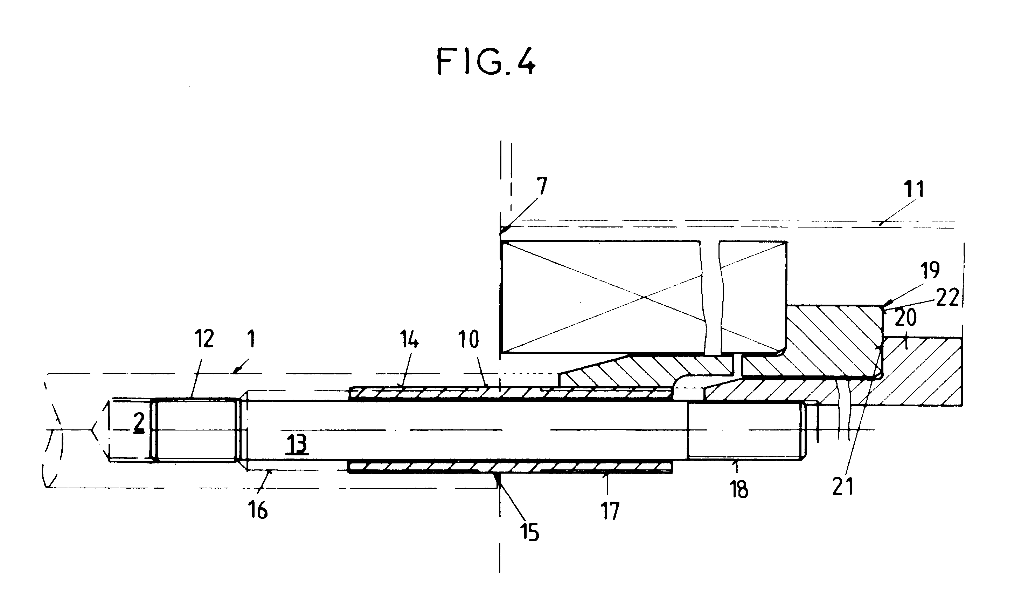

Bei dem Ausführungsbeispiel gemäß Figur 4 ist der Bolzen 1 an seinen beiden Enden mit je einer relativ kurzen, z. B. 60 mm langen, gestuften Axialbohrung 2 versehen. Jede Axialbohrung weist einen hinteren sacklochartigen Bohrungsteil auf, der mit einem Feingewinde 12 versehen ist, das mit dem Feingewinde am zugeordneten Ende eines, möglichst schwach gestuften, entsprechend bemessenen Zugbolzens 13 eine Schraubverbindung bildet. Dem vorerwähnten Bohrungsteil ist ein im Durchmesser größerer, zylindrischer Bohrungsteil vorgeschaltet, der in seinem Eingangsbereich einen zylindrischen glatten Ansatz 10 der Länge $L \approx \sqrt{R \times S_R}$ aufweist, an den sich nach innen ein Feingewinde 14 anschließt, das mit dem Feingewinde einer Zughülse 15, deren Gewindekerndurchmesser gleich dem Durchmesser des Ansatzes 10 ist, anschließt, wobei zwischen der inneren Zughülse 15 und dem Beginn des sacklochartigen Bohrungsteils ein der Begrenzung der Belastung der Zughülse 15 dienender, zylindrisch glatter Dehnhals 16, dessen Durchmesser gleich dem Kerndurchmesser des Hülsengewindes ist, zugeordnet ist.

Die einen konstanten Außendurchmesser aufweisende Zughülse 15 ragt aus der Axialbohrung 2 hervor und ist an ihrem hervorragenden Ende mit einem Feingewinde 17 versehen. Der Zugbolzen 13 durchquert die Zughülse 15, ragt aus der Zughülse 15 seitlich vor und ist an seinem hervorragenden Ende mit einem Feingewinde 18 versehen. Die Kerndurchmeser an den beiden Enden der Zughülse 15 und des Zugbolzens 13 sind jeweils gleich groß. Das vordere Gewinde des Zugbolzens 13 bildet mit dem Innengewinde einer als Dehnmutter - d. h. einer Mutter, bei der die Zugspannung im ganzen Volumen gleich groß ist - ausgebildeten, - in radialer Richtung gesehen - Außenmutter 19 eine Schraubverbindung. Entsprechend bildet das vordere Gewinde der Zughülse 15 mit dem Innengewinde einer als Dehnmutter ausgebildeten Innenmutter 20 eine Schraubenverbindung.

Die Dehnungsquerschnitte der Muttern 19, 20 sind entsprechend der Aufteilung der Zugkraft auf den Zugbolzen 13 und die Zughülse 15 bemessen. Die innere, senkrecht zur Längsmittelachse des Bolzens 1 liegende Innenmutterkopffläche 21 dient als Anlagefläche für die äußere, ebenfalls senkrecht zur Längsmittelachse des Bolzens 1 gerichtete Außenmutterkopffläche 22. Auf die innere Außenmutterkopffläche 21 drückt das vom Druckmittel beaufschlagte Organ einer hydraulischen Presse, die sich innerenends gegen die senkrecht zur Bolzenlängsmittelachse gerichtete Seitenfläche des Radscheibenkopfes 7 abstützt.

Die hydraulische Presse, die Muttern 19, 20 und die hervorragenden Enden des Zugbolzens 13 und der Zughülse 15 sind von einer Sicherheitshaube 11 umgeben.

Für die Zugbolzen 13 und die Zughülsen 15 sind möglichst hochfeste Werkstoffe zu wählen.

Für die Bemessung der Gewinde, Zugbolzendurchmesser, Zughülsendurchmesser und die zu übertragenden Zugkräfte gelten die zum Ausführungsbeispiel gemäß Figur 3 gemachten Angaben entsprechend.

Im Vergleich zu dem im Figur 3 dargestellten Beispiel erlaubt die vorbeschriebene Lösungsvariante nahezu eine Verdoppelung der einleitbaren Zugkraft (Längskraft), was bei einer Streckgrenze des Bolzenwerkstoffs von ca. 650 ... 700

$$\frac{N}{mm^2}$$

zur plastischen Querkontraktion auch des ungebohrten Bolzenabschnitts ausreichend ist.

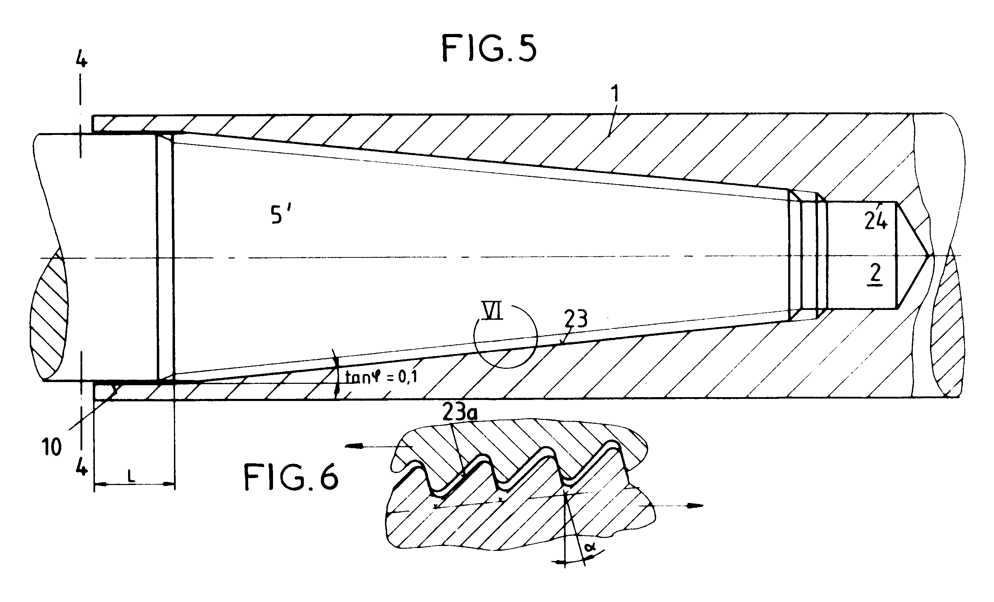

Das in Figur 5 dargestellte Ausführungsbeispiel unterscheidet sich von dem Ausführungsbeispiel gemäß Figur 3 dadurch, daß die Axialbohrung bzw. - wenn die Bolzenenden je eine Bohrung aufweisen - die Axialbohrungen wie bei dem Beispiel gemäß Figur 4 relativ kurz ist bzw. sind und daß der bzw. die Zugstifte 5 in ihrem Einschraubbereich konisch ausgebildet sind und ein dehnungsarmes Sägengewinde aufweisen.

Es ist jedoch auch möglich, die kleine Innenbohrung 24 in Figur 5 im Durchmesser geringfügig zu staffeln (z. B. Φ 5 auf gut zugänglicher Seite und Φ 5,5 auf schwer zugänglicher Seite) und dadurch eine eindeutig definierte Sollbruchstelle des Bolzens herbeizuführen. Nach Bruch an dieser Stelle kann das kurze nicht plastisch verdünnte Gewindeende des Bolzens zwischen den Radscheiben leicht entfernt werden, während der plastisch verdünnte, lange Bolzen riefenfrei zur gut zugänglichen Seite hin ohne Kraftaufwand ausgezogen werden kann.

Die bzw. jede Axialbohrung 2 weist einen zylindrischen, glatten Anfangsteil 10 der Länge $L \approx \sqrt{R \times s_R}$, einen konischen, mit einem radialdehnungsarmen Gewinde versehenen Zwischenteil 23 und einen zylindrischen, glatten Auslaufteil 24 auf. Das Gewinde des Zwischenteils und das Gewinde des zugeordneten Gewindestift-Konusses bilden eine Schraubverbindung, über die die Zugkräfte in den Bolzen 1 eingeleitet werden. Die Gewinde sind vorzugweise Sägengewinde 23a mit Tragflankenwinkeln $\alpha$ zwischen 0° und 15° (vergleiche Figur 6).

7

Der Neigungswinkel des Konus richtet sich nach der Herstellbarkeit des Gewindes im Bolzenlocn mittels Gewindebohrer.

Es empfiehlt sich, folgende Verhältnisse einzuhalten:

$$\frac{d_B}{d_{sa}} = 1,125$$

und

$$\frac{d_B}{d_{si}} = 3,6.$$

Für den Gewindekonus ist ferner vorteilhaft, wenn die Gewindesteigung zu 0,75 bis 1 mm, der Neigungswinkel zu ca. 5,7° (tan $\phi \approx 0,1$) und der Tragflankenwinkel zu 15° gewählt wird.

Jeder Zugstift 5' besteht aus einem konischen Einschraubteil, einem zylindrischen Zwischenteil und einem zylindrischen, mit einem metrischen Gewinde versehenen Endteil. Das metrische Gewinde des Zugstifts bildet mit dem Innengewinde einer Mutter, Dehnschraube oder dergleichen eine Schraubverbindung, wobei die senkrecht zur Bolzenlängsachse gerichtete Innenfläche der Mutter, des Dehnschraubenkopfes oder dergleichen als unmittelbare oder mittelbare Anlagefläche für das druckausübende Organ der hydraulischen Presse dient. Zur Zentrierung der hydraulischen Presse kann eine Zentrierhülse vorgesehen sein, die den Zugstift in seinem Mittelteil übergreift und ihren Axialanschlag an der Seitenfläche des Radscheibenkopfes 7 findet.

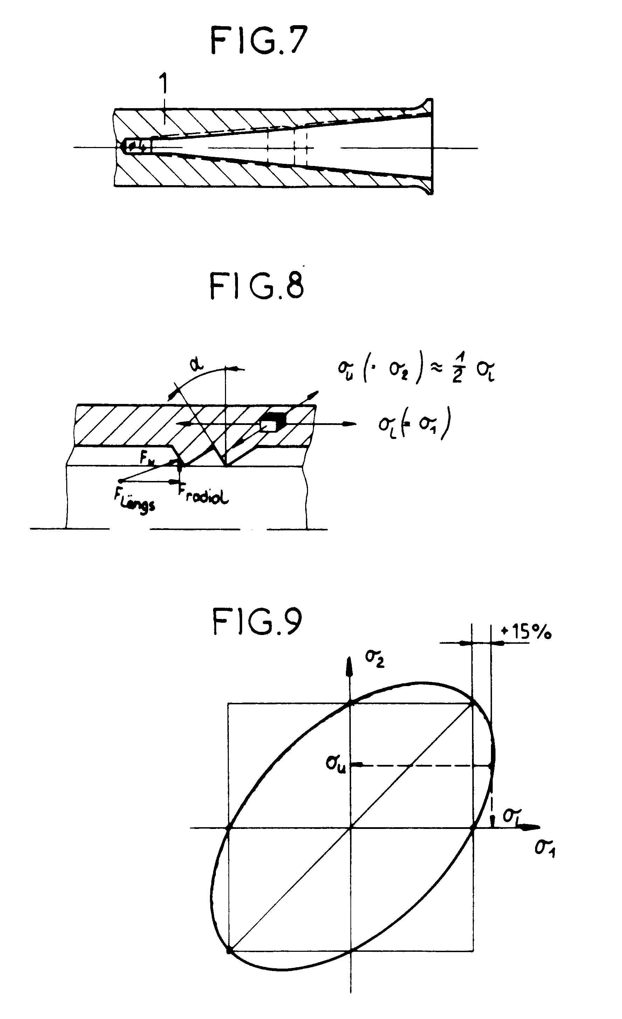

Zur Erzielung höchstmöglicher Kraftübertragung und/oder falls die durchgehende Herstellung der konischen Gewindeform über die gesamte, relativ große Traglänge nicht möglich ist, oder mit Schwierigkeiten verbunden ist, kann auch eine Konusspitze mit zwei Gewindeabschnitten verwendet werden, wobei Neigungswinkel, Gewindesteigung und Tragflankenwinkel der beiden Abschnitte nicht übereinstimmen müssen (Figur 7).

Durch maximale Ausnutzung der durch die mehrachsigen Spannungs-/Dehnungszustände gegebenen Möglichkeiten lassen sich im vollen Bolzenquerschnitt 0-0 Spannungen von nahezu 920

$$\frac{N}{mm^2}$$

erzeugen. Dabei muß die Streckgrenze der Zugstifte 5' im Querschnitt 4-4 nicht höher als etwa 1200

$$\frac{N}{mm^2}$$

sein, was einen für hochfeste Werkstoffe zuverlässig erreichbaren Wert darstellt, der auch genügend oft ertragen werden kann.

Der Bolzen-Ausziehvorgang erfolgt prinzipiell wie bei dem Ausführungsbeispiel gemäß Figur 3. Zu vermeiden ist jedoch ein nur einseitiges Ziehen und Kontrahieren des Bolzens von der Dampfaustrittsseite her, weil dadurch unvermeidlich starke Riefen in den Radscheiben- und Laufschaufelbohrungen entstehen.

Der Bolzen 1 sollte über die gesamte Länge plastisch gelängt und, daraus folgend, verdünnt werden, bevor er ausgezogen wird. Dies kann durch beidseitigen Zug mittels hydraulischer Pressen oder dergleichen erfolgen; Es genügt jedoch auch, mit einem Element gemäß Figur 5 auf der schwer zugänglichen Seite nur gegenzuhalten und auf der gut zugänglichen Seite mittels der hydraulischen Presse Zug auszuüben. Nach Erreichen der Höchstlast wird das Element an der schwer zugänglichen Seite entfernt, um anschließend den Bolzen 1 herausziehen zu können.

Nach Anspruch 6 zeichnet sich ein weiteres Merkmal dadurch aus, daß die Gewindeflanken wie in Figur 8 dargestellt ist einen Winkel $\alpha$ aufweisen, der so bemessen ist, daß sich im zylindrischen Querschnitt des Innenkörpers infolge des Zusammenwirkens der Längszug- und Umfangsaufweitungsdehnungen ein meh-

rachsiger Spannungszustand mit $\sigma_u$ (= $\sigma_L$) $\approx \frac{1}{2} \sigma_L$ (=$\sigma_1$) einstellt, wodurch der Fließbeginn im zylindrischen Restquerschnitt des Innenkörpers um ca. 15 % erhöht und gleichzeitig ein Klemmen des Innenkörpers im Außenkörper infolge radialer Aufweitung vermieden wird. In Figur 8 sind die an den Gewindeflanken angreifenden Kräfte und die daraus resultierenden Spannungen eingetragen. Die Umfangsspannung $\sigma_u$ und die Längsspannung $\sigma_L$ können mit $\alpha$ so eingestellt werden, daß diese beiden Hauptspannungen sich ergeben zu $\sigma_u = \frac{1}{2} \sigma_L$ . Aus diesen Spannungen $\sigma_u = \frac{1}{2} \sigma_L$ und $\sigma_L$ resultiert eine Umfangsdehnung $\epsilon_u$ nach der Beziehung:

$$\epsilon_u = \frac{1}{E} (\sigma_u - \mu_{PL} \bullet \sigma_L) \text{ mit } \sigma_u = \frac{1}{2} \sigma_L \text{ folgt:}$$
$$\epsilon_u = \frac{1}{E} (\frac{1}{2} \sigma_L - \mu_{PL} \bullet \sigma_L) \approx 0 \text{ da } \mu_{PL} \approx 0,5$$

Es erfolgt also keine Umfangsdehnung, bzw. keine radiale Aufweitung, so daß der Bolzen nicht klemmen kann.

Nach Figur 9 ergibt sich nach der Gestaltänderungsenergiehypothese, daß bei zweiachsigem Spannungszustand der Fließbeginn auf einer Ellipse liegt, wenn man die Hauptspannungen $\sigma_1, \sigma_2$ als Ordinaten wählt. Man erkennt, daß für $\sigma_u = \frac{1}{2} \sigma_L$ die Fließspannung um ca. 15 % gegenüber einem einachsigen Spannungszustand im Punkt $\sigma_2(0)$, = 0 erhöht, so daß beste Materialausnutzung eintritt.

## Patentansprüche

1. Verfahren zum Ausbauen von langen, aus zähem Werkstoff bestehenden zylindrischen Innenkörpern aus Schrumpfverbindungen, bei dem der Innenkörper durch Ziehen bis in den plastischen Bereich radial zum Schrumpfen gebracht und anschließend herausgezogen oder herausgestoßen wird, dadurch gekennzeichnet, daß in den Innenkörper zuerst eine möglichst zentrische Axialbohrung eingebracht wird, in die dann entweder ein seitlich aus der Axialbohrung herausragendes, mit einem zugausübenden Gerät zu verbindendes Kuppelorgan eingeschraubt oder ein massiver Bolzen mit axial hervorragendem, von einem druckausübenden Organ zu beaufschlagenden Ende eingesteckt wird, und daß beim anschließenden Ziehen der Innenkörper nach Fließbeginn relativ langsam bis zu einem Höchstlastpunkt, der 3% bis 5% unterhalb der Bruchlast liegt, belastet wird.

2. Verfahren nach Anspruch 1, dadurch gekennzeichnet, daß der Innenkörper von einer Seite gezogen und gleichzeitig auf der gegenüberliegenden Seite gegengehalten wird.

3. Verfahren nach Anspruch 1, dadurch gekennzeichnet, daß der Innenkörper gleichzeitig von beiden Seiten gezogen wird.

4. Vorrichtung zur Durchführung des Verfahrens nach den Ansprüchen 1 bis 3 bei einem Innenkörper, der aus dem gebohrten Element nicht oder nicht wesentlich hervorragt und dessen von beiden Seiten her erzeugte, ungestufte Axialbohrung sich über die ganze Innenkörperlänge erstreckt bzw. dessen von beiden Seiten her erzeugten, ungestuften Axialbohrungen sich bis auf eine mittlere Zwischenwand über die ganze Innenkörperlänge erstrecken, mit einer Bohreinrichtung, einer Gewindeschneideinrichtung, einer oder zwei zugausübenden Geräten und einer oder zwei Zugkraftüberleitungen von der bzw. den zugausübenden Geräten in den Innenkörper, dadurch gekennzeichnet, daß die bzw. jede Zugkraftüberleitung einen, mit einem Feingewinde versehenen Zugstift (5) mit im Vergleich zum Innenkörperwerkstoff mindestens gleich festen Werkstoff aufweist, wobei das Feingewinde des bzw. jedes Zugstiftes mit dem zugeordneten, nur im Bereich des Bohrungsanfangs vorgesehenen Innenkörper-Feingewinde eine Schraubverbindung bildet, und daß die Gewindesteigungen und die im Bereich der Gewinde befindlichen Restquerschnitte des Innenkörpers (1) und des bzw. der Zugstifte (5) unter Ausnutzung der an den gekerbten Krafteinleitungsstellen infolge mehrachsiger Beanspruchungszustände erhöhten Kerbzugfestigkeitswerte gewählt sind.

5. Vorrichtung nach Anspruch 4, dadurch gekennzeichnet, daß die Axialbohrung (2) zwischen dem Gewindeauslauf und dem Innenkörperende einen bzw. je einen zylindrischen, glatten Abschnitt (10) aufweist, dessen Innendurchmesser gleich dem Außendurchmesser des Feingewindes und dessen Länge L gemäß der Formel $L \approx \sqrt{R \times S_R}$ gewählt ist, wobei R der mittlere Radius des betrachteten Zylinders und $S_R$ die mittlere Wanddicke des Zylinders ist.

6. Vorrichtung nach Anspruch 4 und 5, dadurch gekennzeichnet, daß der Neigungswinkel $\alpha$ der Gewinde-

flanken so bemessen wird, daß sich im zylindrischen Querschnitt des Innenkörpers infolge des Zusammenwirkens der Längszug - und Umfangsaufweitungsdehnungen ein mehrachsiger Spannungszustand mit $\sigma_u$ ($=\sigma_2$) $\approx \frac{1}{2} \sigma_L$ ($=\sigma_1$) einstellt, wodurch der Fließbeginn im zylindrischen Restquerschnitt des Innenkörpers um ca. 15 % erhöht und gleichzeitig ein Klemmen des Innenkörpers im Außenkörper infolge radialer Aufweitung vermieden wird.

7. Vorrichtung zur Durchführung des Verfahrens nach den Ansprüchen 1 bis 3 bei einem nicht oder nicht wesentlichen hervorragenden Innenkörper, der - für den Demontagefall - an einem oder beiden Enden mit einer bzw. je einer mit Gewinde, insbesondere Feingewinde, versehenen, kurzen Axialbohrung zu versehen ist, mit einer Bohr-, einer Gewindeschneideeinrichtung, mindestens einem zugausübenden Gerät und einer oder zwei Zugkraftüberleitungen von dem bzw. den zugausübenden Geräten in den Innenkörper, gekennzeichnet durch,
- eine erste Zugkraftüberleitung in Form eines möglichst schwach gestuften, in der Axialbohrung (2) eingeschraubten, hervorragenden Zugbolzens (13) und einer als Dehnmutter ausgebildeten, auf dem hervorragenden Zugbolzenende aufgeschraubten, in radialer Richtung gesehen - Innenmutter (20)
- eine zweite Zugkraftüberleitung in Form einer in einem axialen Abstand zur Zugbolzen-Einschraubstelle angeordneten, den Zugbolzen (13) mit Spiel umgreifenden, am vorderen Ende der Axialbohrung (2) eingeschraubten, hervorragenden Zughülse (15) und einer als Dehnmutter ausgebildeten, auf das hervorragende Zughülsenende aufgeschraubten, der Innenmutter (20) vorgeschalteten, durch das zugausübende Gerät beaufschlagten Außenmutter (19),
- die Bemessung der Dehnungsquerschnitte der Außen- und Innenmutter entsprechend der Zugkraftaufteilung auf den Zugbolzen (13) und die Zughülse (15) und
- die Wahl der Gewindesteigungen und der im Bereich der Gewinde befindlichen Restquerschnitte des Innenkörpers (1), des Zugbolzens (13) und der Zughülse (15) unter Ausnutzung der an den gekerbten Krafteinleitungsstellen infolge mehrachsiger Beanspruchungszustände erhöhten Kerbzugfestigkeitswerte.

8. Vorrichtung nach Anspruch 7, dadurch gekennzeichnet, daß die bzw. jede Axialbohrung (2) zwischen dem Gewindeauslauf der Zughülse (15) und dem äußeren Innenkörperende einen zylindrischen, glatten Abschnitt (10), dessen Durchmesser gleich dem Außendurchmesser des Gewindes der Zugbüchse und dessen Länge gemäß der Formel $L \approx \sqrt{R \times S_R}$ gewählt ist, aufweist.

9. Vorrichtung nach Anspruch 7 oder 8, dadurch gekennzeichnet, daß die Gewinde als Tragflankenwinkel zwischen $\alpha = = 0°$ und $15°$ aufweisende Sägengewinde oder dergleichen radialdehnungsarme Gewinde gemäß Anspruch 6 ausgebildet sind.

10. Vorrichtung nach Anspruch 4 oder Anspruch 7, dadurch gekennzeichnet, daß der bzw. jeder Zugstift (5), der bzw. jeder Zugbolzen (13) und die zugeordneten Innenkörperteile konische Form aufweisen, daß die Gewinde Sägengewinde oder dergleichen radialdehnungsarme Gewinde mit Tragflankenwinkeln $\alpha$ zwischen $0°$ und $15°$ gemäß Anspruch 6 sind, und daß sich an die konische Bohrung im Innenkörper ein zylindrischer, glatter Abschnitt (10), dessen Durchmesser gleich dem größten Außendurchmesser des konischen Gewindes des Zugbolzens und dessen Länge gemäß der Formel $L \approx \sqrt{R \times S_R}$ gewählt ist, anschließt.

11. Vorrichtung nach Anspruch 10, dadurch gekennzeichnet, daß der bzw. jeder Gewindekonus zwei Abschnitte mit gleicher oder unterschiedlicher Kegelneigung, gleicher oder unterschiedlicher Gewindesteigung und gleichen oder unterschiedlichen Tragflankenwinkeln aufweist.

## Claims

1. A method for removing elongate shrink-fitted cylindrical cores made of a tough material, wherein the core is radially contracted by applying elongation forces until plastic deformation occurs and then the core is withdrawn or ejected, characterized in that firstly an axial bore is cut as concentrically as possible in the core, into which secondly either a coupling member is screwed, which projects laterally from the axial bore and which may be coupled to a traction load generator, or else a solid bolt is inserted, which presents an axially protruding end for cooperation with a pressure load device, and that the core is finally loaded during its subsequent elongation at a slowly increasing rate after deformation has begun, up to a maximum stress of between 95 and 97% of its rupture strength.

2. A method according to claim 1, characterized in that the core is withdrawn from one side and that simultaneously a counterforce is applied to the other side.

3. A method according to claim 1, characterized in that the core is drawn simultaneously from both sides.

4. A device for implementing the method according to claims 1 to 3, applied to a core which does not or not notably project from the hub or hole and which is provided with an axial stepless bore drilled from both sides and extending over the entire core length, or with two stepless axial bores produced from both sides and extending over the entire core length except a central partition, comprising a drilling device, a thread cutting device, one or two traction devices and one or two traction transfer devices for transferring the traction from the traction device or devices to the core, characterized in that the or each traction transfer device comprises a traction pin (5) provided with a fine screw thread and made of a material which is at least as hard as the core material, the fine screwed thread of the traction pin or pins constituting a screw connection with the associated fine screw thread of the core provided only in the inlet area of the bore, and that the pitch of the thread and the residual cross-section of the core (1) and of the pin or pins (5) in the threaded area are selected in accordance with the increased notch stress values at the notched force transfer points due to the pluriaxial stress states.

5. A device according to claim 4, characterized in that the axial bore (2) includes between the end of the thread and the end of the core a smooth cylindrical portion (10) whose inside diameter corresponds to the outside diameter of the fine screw thread and whose length L is selected according to the formula L $\approx \sqrt{R.S_R}$, R being the average radius of the cylinder under consideration and $S_R$ being the average wall thickness of the cylinder.

6. A device according to claims 4 and 5, characterized in that the angle of inclination $\alpha$ of the thread slopes is selected such that a pluriaxial stress state establishes with $\sigma_u(=\sigma_2) \approx 0.5\sigma_L(=\sigma_1)$ due to the cooperation of the expansions in longitudinal and in circumferential direction, the beginning of the creep deformation in the residual cylindrical section of the core being increased by about 15% and a jamming of the core in the hub or hole due to a radial expansion being avoided.

7. A device for implementing the method according to claims 1 to 3, applied to a core which does not or not notably project from the hub or hole, the core being provided for the dismounting purpose on one end or both ends with a short axial bore having a thread, especially a fine screw thread, comprising a drilling device, a thread cutting device, at least one traction device and one or two strength transfer devices for transferring the forces between the traction device or devices to the core, characterized
   - by a first stress transfer device made of a tensile bolt (13) which is stepped as little as possible, which is screwed into the axial bore (2) and which projects therefrom, and an inner nut (20), seen in radial direction, operating as elongation nut and screwed onto the projecting traction bolt end,
   - by a second stress transfer device composed of a traction sleeve (15) which is axially spaced from the point where the traction bolt is screw-engaged, which surrounds with clearance the traction bolt (13), which is screwed into the front end of the axial bore (2) and which projects therefrom, and of an outer nut (19) which operates as elongation nut, which is screwed onto the projecting end of the traction sleeve, which precedes the inner nut (20) and which is loaded by the traction device,
   - by the calibration of the elongation sections of the inner and outer nut in accordance with the stress distribution on the traction bolt (13) and the traction sleeve (15),
   - and by the choice of the thread pitch and of the residual sections in the threaded zone of the core (1), of the traction bolt (13) and of the traction sleeve (15) in accordance with the increased notch stress states at the notched force transfer points due to the pluriaxial strength states.

8. A device according to claim 7, characterized in that the axial bore or bores (2) respectively between the end of the thread in the traction sleeve (15) and the outer core end present a smooth cylindrical portion (10), the diameter of which is selected equal to the outer diameter of the screw thread in the traction sleeve and the length of which is selected according to the formula L $\approx \sqrt{R.S_R}$.

9. A device according to claim 7 or 8, characterized in that the screw threads are realized as sawtooth

EP 0 354 509 B1

threads having a bearing edge angle a between 0 and 15° or as similar screw threads with a low radial expansion according to claim 6.

10. A device according to claim 4 or 7, characterized in that each traction pin (5), each traction bolt (13) and the associated core components present a conical form, that the threads are realized as sawtooth threads or similar screw threads with a low radial expansion and a bearing edge angle $\alpha$ between 0 and 15° according to claim 6, and that a smooth cylindrical portion (10) of a diameter equal to the largest outer diameter of the conical thread of the traction bolt and of a length in accordance with the formula L $\approx \sqrt{R.S_R}$ is provided adjacent to the conical bore in the core.

11. A device according to claim 10, characterized in that each threaded cone presents two portions with equal or unequal cone inclination, with equal or unequal thread pitch and equal or unequal bearing edge angles.

**Revendications**

1. Méthode de démontage de corps cylindriques en matériau tenace, qui sont frettés par dilatation, le corps étant aminci radialement en l'allongeant jusqu'à la déformation plastique et puis extrait ou expulsé, caractérisé en ce qu'on perce d'abord dans ledit corps un alésage axial aussi concentrique que possible, qu'ensuite soit on visse dans cet alésage un organe d'accouplement, qui dépasse cet alésage latéralement et qui peut être accouplé à un organe générateur de traction, soit on introduit un boulon plein dans cet alésage, dont l'extrémité dépassant l'alésage axialement peut être accouplée à un organe générateur de poussée, et que, lors de la traction s'ensuivant, on monte la charge sur le corps après le début de la déformation plastique à une vitesse relativement faible jusqu'à un point de charge maximal qui est situé entre 3 et 5% en-dessous de la charge de rupture.

2. Méthode selon la revendication 1, caractérisée en ce que le corps est tiré d'un côté et poussé simultanément par le côté opposé.

3. Méthode selon la revendication 1, caractérisée en ce que le corps est tiré simultanément par les deux côtés.

4. Dispositif pour la mise en oeuvre de la méthode selon les revendications 1 à 3 en application à un corps qui ne dépasse pas ou pas notablement l'élément portant l'alésage, et dont l'alésage axial reálisé en forant des deux côtés s'étend sans étage sur toute la longueur du corps respectivement dont les deux alésages axiaux s'étendent sans étages des deux côtés sur toute la longueur du corps sauf pour une paroi intermédiaire médiane, comprenant un dispositif de forage, un outil de filetage, un ou deux organes générateurs de traction et un ou deux dispositifs de couplage de force de traction entre le ou les organes générateurs de traction et le corps, caractérisé en ce que le ou chaque organe de couplage de force de traction comporte une barre de traction (5) en un matériau d'une résistance au moins comparable à celle du corps et muni d'un filetage fin, le filetage fin de la ou des barres de traction constituant un système de vissage avec le filetage fin prévu seulement à l'entrée de l'alésage du corps, et que les pas de filetage et les sections résiduelles du corps (1) et de la ou des barres de traction (5) au niveau des filetages sont choisis en exploitant les valeurs de résistance d'encoche à la rupture aux endroits encochés d'attaque de la force, valeurs qui sont plus élevées à cause des états de contrainte pluriaxiaux.

5. Dispositif selon la revendication 4, caractérisé en ce que le ou chaque alésage axial (2) présente entre la fin du filetage et l'extrémité intérieure de l'alésage une section cylindrique lisse (10) dont le diamètre intérieur équivaut au diamètre extérieur du filetage fin et dont la longueur L est choisie selon la formule L $\approx \sqrt{R.S_R}$, R étant le rayon moyen du cylindre considéré et $S_R$ étant l'épaisseur moyenne de paroi du cylindre.

6. Dispositif selon les revendications 4 et 5, caractérisé en ce que l'angle d'inclinaison $\alpha$ des flancs de filetage est choisi de sorte qu'on obtienne un état de contrainte pluriaxial dans la section cylindrique du corps à cause de la coopération de la traction longitudinale et des élargissements circonférentiels avec $\sigma_u(=\sigma_2) \approx 0,5\sigma_L(=\sigma_1)$, le début de la déformation plastique dans la section résiduelle cylindrique du corps étant majoré d'environ 15% et un grippement du corps dans son logement étant évité à cause

12

de l'élargissement radial.

7. Dispositif pour la mise en oeuvre de la méthode selon les revendications 1 à 3, le corps ne saillissant pas ou pas notablement et étant muni - pour le démontage - d'un alésage axial de courte longueur avec un filetage, en particulier un filetage fin, comprenant un dispositif de forage, un dispositif pour réaliser le filetage, au moins un organe générateur de traction et un ou deux organes de couplage de la force de traction entre le ou les organes générateurs de traction et le corps, caractérisé par:
   - un premier organe de couplage de la force de traction sous forme d'un boulon de traction (13), qui est aussi faiblement étagé que possible, qui est vissé dans l'alésage axial (2) et qui en fait saillie, et d'un écrou intérieur (20) faisant office d'un écrou de dilatation et étant vissé sur l'extrémité saillissante du boulon de traction, vu en direction radiale,
   - un second couplage de force de traction constitué d'un manchon de traction (15) disposé à distance axiale de l'endroit de vissage du boulon de traction et entourant avec jeu ce boulon de traction (13), le manchon (15) étant vissé dans la partie avant de l'alésage axial (2) et en faisant saillie, et d'un écrou extérieur (19) faisant office d'écrou de dilatation, étant vissé sur l'extrémité saillissante du manchon de traction, étant fonctionellement en série avec l'écrou intérieur (20) et étant chargé par l'organe générateur de traction,
   - le choix des sections de dilatation de l'écrou extérieur et de l'écrou intérieur étant fait en fonction de la répartition de la force de traction entre le boulon de traction (13) et le manchon de traction (15), et
   - les choix des pas de filetage et des sections résiduelles au niveau des filetages du corps (1) du boulon de traction (13) et du manchon de traction (15) étant faites en profitant des valeurs de résistance à la traction élevée aux endroits encochés d'accouplement de force dû aux états de contrainte pluriaxiaux.

8. Dispositif selon la revendication 7, caractérisé en ce que le ou chaque alésage axial (2) présente entre la fin du filetage du manchon de traction (15) et l'extrémité extérieure du corps une section cylindrique lisse (10), dont le diamètre équivaut au diamètre extérieur du filetage du manchon de traction et dont la longueur est choisie selon la formule $L \approx \sqrt{R.S_R}$.

9. Dispositif selon la revendication 7 ou 8, caractérisé par le fait que les filetages sont réalisées comme des filetages à scie présentant des angles portants entre $\alpha = 0°$ et $\alpha = 15°$, ou comme un filetage similaire se distinguant par sa faible dilatation radiale selon la revendication 6.

10. Dispositif selon la revendication 4 ou 7, caractérisé en ce que la ou chaque barre de traction (5), le ou chaque boulon de traction (13) et les parties associées du corps présentent une forme conique, que les filetages sont des filetages à scie ou similaire se distinguant par leur faible dilatation radiale et ayant des angles portants $\alpha$ entre 0° et 15° selon la revendication 6, et que l'alésage conique dans le corps est suivi par une section cylindrique lisse (10) dont le diamètre équivaut au diamètre maximal du filetage conique du boulon de traction et dont la longueur est choisie selon avec la formule $L \approx \sqrt{R.S_R}$.

11. Dispositif selon la revendication 10, caractérisé en ce que le ou chaque cône fileté présente deux sections d'inclinaison coniques identiques ou différentes, de pas de filetage identiques ou différents et d'angle portant identique ou différent.

# FIG.1

# FIG. 2

FIG.3

# FIG.4

EP 0 354 509 B1

FIG.5

FIG.6

EP 0 354 509 B1

## FIG.7

## FIG.8

$$\sigma_u \, (\cdot \, \sigma_2) \approx \tfrac{1}{2} \, \sigma_l$$

$$\sigma_l \, (\cdot \, \sigma_1)$$

## FIG.9

+15%